# EUROPEAN PATENT APPLICATION

(11) **EP 2 680 508 A1**
(43) Date of publication of application: **01.01.2014**
(21) Application number: 12792373.8
(22) Date of filing: 23.03.2012
(51) Int. Cl.: H04L 12/56

(54) **ERROR RECOVERY METHOD, ACCESS POINT EQUIPMENT, SITE EQUIPMENT AND SYSTEM THEREOF**

(30) Priority: 21.06.2011 CN 201110167875
(71) Applicant: Huawei Technologies Co., Ltd., Shenzhen, Guangdong 518129 (CN)
(72) Inventor: LI, Yunbo, Shenzhen Guangdong 518129 (CN); WU, Tianyu, Shenzhen Guangdong 518129 (CN); YANG, Xun, Shenzhen Guangdong 518129 (CN)
(74) Representative: Isarpatent
(86) International application number: PCT/CN2012/072880
(87) International publication number: WO 2012/163146

(57) **Abstract**

The embodiments of the present invention provide an error recovery method, an access point device, a station device, and a system thereof. The error recovery method includes: transmitting a data frame to a station allowed to enter a power save mode, where the data frame is used to indicate the end of user data transmission; and retransmitting the data frame during a current transmission opportunity period if no acknowledgement frame returned by the station in response to the data frame is received. Based on the above technical solution, the access point retransmits the data frame directly during the current transmission opportunity period and there is no need to contend for a new transmission opportunity period to perform the error recovery, thereby speeding up the error recovery and reducing the error recovery delay. Unnecessary contending for a new transmission opportunity period is avoided when the error recovery can be implemented within the current transmission opportunity period, thereby increasing the error recovery efficiency, saving the network resources, and improving the quality of service.

## Description

### FIELD OF THE INVENTION

The present invention relates to the wireless local area network field, and in particular, to an error recovery method, an access point device, a station device, and a system thereof in the wireless local area network field.

### BACKGROUND OF THE INVENTION

A power saving mechanism, Transmission Opportunity (Transmission Opportunity, TXOP) Power Save (Power Save, PS), is introduced to the new standard. In the power saving mechanism, TXOP PS, when specific conditions are met during a TXOP period, a station (Station, STA) that supports this mechanism is allowed to enter a doze state so as to save power.

An access point (Access point, AP) may set a field TXOP_PS_NOT_ALLOWED (TXOP PS is not allowed) in VHT-SIG-A1 (Very High Throughout Signal-A1, very high throughout signal-A1) to indicate whether the STA in the TXOP PS mode is allowed to enter the doze state; when the field is 0, it indicates that the STA in the TXOP PS mode is allowed to enter the doze state; otherwise, the STA in the TXOP PS mode is not allowed to enter the doze state.

During a TXOP period, if the STA in the TXOP PS mode is allowed to enter the doze state, namely, the power save mode, the STA needs to determine whether specific conditions are met; if the specific conditions are met, the STA may enter the doze state until the TXOP period ends, and the AP is not allowed to transmit more data to the STA already allowed to enter the doze state during the remaining time of the current TXOP period.

One of the specific conditions for entering the doze state is that the STA returns an acknowledgement frame in response to a frame with a More Data field (More Data field) being 0. The frame with the More Data field (More Data field) being 0 is a data frame indicating the end of data transmission, where the frame carries user data destined for the STA, and indicates that no more user data will be transmitted to the STA, so that the STA enters the doze state after returning an acknowledgement frame.

In the prior art, the STA enters the doze state after receiving the frame with the More Data field being 0 and returning an acknowledgement frame, and the AP stops transmitting data to the STA after transmitting the frame with the More Data field being 0 to the STA.

However, if the frame with the More Data field being 0 is erroneous, or the acknowledgement frame in response to the frame with the More Data field being 0 is erroneous, the AP may fail to receive the acknowledgement frame, and there is an error in the transmission corresponding to the frame with the More Data field being 0. In the prior art, if the AP fails to receive the acknowledgement frame, the AP may cache the frame with the More Data field being 0, so as to retransmit the frame with the More Data field being 0 to the STA after obtaining another TXOP to communicate with the STA, and re-receive the corresponding acknowledgement frame to perform error recovery. This will reduce the transmission efficiency. Furthermore, a new TXOP period is required to be obtained before the error recovery can be performed, thereby causing a longer delay in error recovery, and lowering the quality of service.

### SUMMARY OF THE INVENTION

Embodiments of the present invention provide an error recovery method, an access point device, a station device, and a system thereof, where the error recovery may be performed during the current transmission opportunity period, so as to solve the problem that the error recovery cannot be performed until a next transmission opportunity period is obtained, thereby improving the error recovery efficiency and quality of service.

In one aspect, an embodiment of the present invention provides an error recovery method, including: transmitting a data frame to a station allowed to enter a power save mode, where the data frame is used to indicate an end of user data transmission; and retransmitting the data frame to the station during a current transmission opportunity period if no acknowledgement frame returned by the station in response to the data frame is received.

In another aspect, an embodiment of the present invention provides an error recovery method, including: receiving a data frame transmitted by an access point, where the data frame is used to indicate an end of user data transmission; and receiving, during a current transmission opportunity period, the data frame retransmitted by the access point, where the data frame retransmitted by the access point is transmitted by the access point if the access point fails to receive an acknowledgement frame, and the acknowledgement frame is returned by a station when the data frame transmitted by the access point is received by the station allowed to enter a power save mode.

In still another aspect, an embodiment of the present invention provides an access point device, including: a transmitting module, configured to transmit a data frame to a station allowed to enter a power save mode, where the data frame is used to indicate an end of user data transmission; and a retransmitting module, configured to retransmit the data frame to the station during a current transmission opportunity period if no acknowledgement frame returned by the station in response to the data frame is received.

In still another aspect, an embodiment of the present invention provides a station device, including: a first receiving module, configured to receive a data frame transmitted by an access point, where the data frame is used to indicate an end of user data transmission; and a second receiving module, configured to receive, during a current transmission opportunity period, the data frame retransmitted by the access point, where the data frame retransmitted by the access point is transmitted by the access point if the access point fails to receive an acknowledgement frame, and the acknowledgement frame is returned by the station when the data frame transmitted by the access point is received by the station allowed to enter a power save mode.

In still another aspect, an embodiment of the present invention provides an error recovery system, including an access point device and a station device. The access point device is configured to: transmit a data frame to the station device allowed to enter a power save mode, where the data frame is used to indicate the end of user data transmission; and if no acknowledgement frame returned by the station device in response to the data frame is received, retransmit the data frame to the station device during the current transmission opportunity period. The station device is configured to receive the data frame transmitted by the access point device and receive the data frame retransmitted by the access point device during the current transmission opportunity period.

Based on the above technical solution, after transmitting the data frame indicating the end of user data transmission, the access point retransmits the data frame directly during the current transmission opportunity period if no acknowledgement frame is received, so that unlike the prior art, it is not necessary to contend for a new transmission opportunity period before retransmission. Therefore, the error recovery can be performed during the current transmission opportunity period, thereby speeding up error recovery and reducing the error recovery delay. Unnecessary contending for a new transmission opportunity period is avoided when the error recovery can be implemented within the current transmission opportunity period, thereby increasing the error recovery efficiency, saving the network resources, and improving the quality of service.

### BRIEF DESCRIPTION OF THE DRAWINGS

FIG. 1 is a flowchart of an error recovery method according to an embodiment of the present invention;

FIG. 2 is a flowchart of another error recovery method according to an embodiment of the present invention;

FIG. 3 is a flowchart of still another error recovery method according to an embodiment of the present invention;

FIG. 4 is a flowchart of still another error recovery method according to an embodiment of the present invention;

FIG. 5 is a structural block diagram of an access point device according to an embodiment of the present invention;

FIG. 6 is a structural block diagram of another access point device according to an embodiment of the present invention;

FIG. 7 is a structural block diagram of a station device according to an embodiment of the present invention;

FIG. 8 is a structural block diagram of another station device according to an embodiment of the present invention; and

FIG. 9 is a structural block diagram of an error recovery system according to an embodiment of the present invention.

### DETAILED DESCRIPTION OF THE EMBODIMENTS

The technical solution according to embodiments of the present invention is described clearly and completely below with reference to embodiments and accompanying drawings. Evidently, the embodiments are exemplary only and the present invention is not limited to such embodiments. Persons of ordinary skill in the art can derive other embodiments from the embodiments given herein without making any creative effort, and all such embodiments shall fall within the protection scope of the present invention.

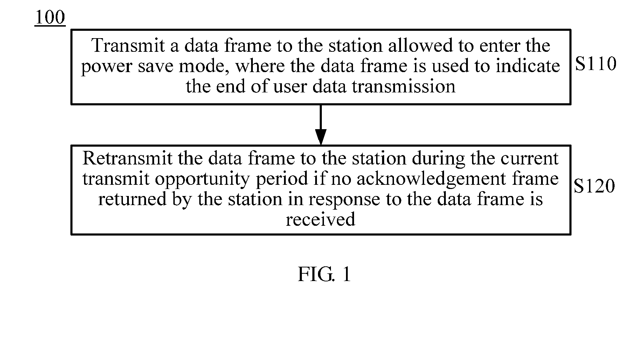

Firstly, an error recovery method 100 according to an embodiment of the present invention is described with reference to FIG. 1.

As shown in FIG. 1, the method 100 includes: in S110, transmitting a data frame to a station allowed to enter a power save mode, where the data frame is used to indicate the end of user data transmission; and in S120, retransmitting the data frame to the station during the current transmission opportunity period if no acknowledgement frame returned by the station in response to the data frame is received.

For example, the method 100 may be executed by an access point. The access point transmits a data frame indicating the end of user data transmission to a station allowed to enter a power save mode, namely, allowed to enter a doze state, and if no acknowledgement frame is received, unlike the case in the prior art where retransmission can only be performed after a new transmission opportunity period is obtained, the data frame is retransmitted to the station during the current transmission opportunity period; therefore, it is not necessary to contend for a new transmission opportunity period to perform error recovery when the error recovery can be implemented within the current transmission opportunity period, thereby avoiding unnecessary waste of time and waste of resources due to unnecessary contention and increasing the error recovery efficiency.

In S110, the data frame indicating the end of user data transmission may be a data frame with the More Data field being 0, and it is indicated through the data frame that no more user data is to be transmitted to the station. In the prior art, after the AP transmits the data frame, no matter whether the AP succeeds in receiving the acknowledgement frame, the AP will not retransmit the data frame to the station and the communication with the station ends. In particular, if the AP does not receive the acknowledgement frame, a new transmission opportunity period is contended for to perform the retransmission. However, according to the embodiment of the present invention, if the AP does not receive the acknowledgement frame, the data frame is retransmitted directly during the current transmission opportunity period.

In S 120, there are two cases where the AP does not receive the acknowledgement frame. Case one: The AP receives no frame at all due to the possible reason that the station does not receive the data frame or the data frame is decoded incorrectly so that no acknowledgement frame is sent; or the acknowledgement frame is lost during the transmission and the AP does not sense the existence of the acknowledgement frame. Case two: The AP receives the frame, but the AP decodes the frame incorrectly, and therefore, the AP is unable to identify the frame as an acknowledgement frame.

In any case, the AP retransmits the data frame to the station to possibly implement error recovery in some cases. For example, the AP fails to receive the acknowledgement frame because the station does not transmit the acknowledgement frame; in this case, the station does not receive the data frame or the data frame is decoded incorrectly, and the station does not enter the doze state. In this case, the AP may implement the error recovery by retransmitting the data frame.

According to an embodiment of the present invention, the AP may retransmit the data frame to the station during a preset period within the current transmission opportunity period and the station enters the doze state after the preset period.

A period may be preset for the AP and the station, so that even if the station correctly receives the data frame indicating the end of the user data transmission and returns an acknowledgement frame, the station does not enter the doze state immediately, but waits for a while before entering the doze state. In this way, there may be redundant time for the AP to perform error recovery; therefore, even if the acknowledgement frame is lost or an error occurs so that the AP does not receive the acknowledgement frame, the AP still has chance to perform error recovery during the current transmission opportunity period. When the preset period ends, the AP confirms that the station enters the doze state and stops the data frame retransmission.

According to the embodiment of the present invention, the preset period may be a period not shorter than SIFS (Short Interframe Space, Short Interframe space).

For example, the preset period may be TxPIFS. TxPIFS is a difference between PIFS and aTxRxturnaroundTime. The value of aTxRxturnaroundTime is different depending on different WiFi (Wireless Fidelity, wireless fidelity) systems; when it is an orthogonal frequency division multiplexing system, aTxRxturnaroundTime is shorter than 2 µs; the aTxRxturnaroundTime may represent the time interval of switching from a channel monitoring state to a transmitting state. PIFS is the sum of SIFS and aSlotTime (a time slot period), where aSlotTime represents a time unit, and in the 802.11ac standard, aSlotTime may be 9 µs.

For another example, the preset period may be a period not shorter than PIFS (Point (coordination function) Interframe Space, point (coordination function) interframe space). For example, the preset period may be DIFS (Distributed (coordination function) Interframe Space, distributed (coordination function) interframe space). DIFS may be the sum of PIFS and aSlotTime. For another example, the preset period may be TxPIFS. TxPIFS is a difference between DIFS and aTxRxturnaroundTime.

According to an embodiment of the present invention, the AP may retransmit the data frame to the station for a preset number of times during the current transmission opportunity period.

If the AP does not receive the acknowledgement frame, the AP may directly retransmit the data frame for a certain number of times so that it is likely to implement error recovery during the current transmission opportunity period. For example, the AP fails to receive the acknowledgement frame due to the reason that the station does not receive the data frame or the data frame is decoded incorrectly; in this case, the station is not in the doze state, and the AP may retransmit the data frame directly to implement the error recovery during the current transmission opportunity period.

According to an embodiment of the present invention, the AP may retransmit the data frame once to the station during the current transmission opportunity period. A common view is that if the one retransmission of the AP does not achieve the objective of error recovery, it is less likely for the subsequent retransmission to achieve this objective; therefore, one retransmission only can realize a good tradeoff between the error recovery efficiency and the overhead of the network resource, saving the unnecessary network overhead caused by multiple times of retransmission for implementing the error recovery.

In the error recovery method according to the embodiment of the present invention, after the data frame indicating the end of user data transmission is transmitted, and if no acknowledgement frame is received, the data frame is retransmitted directly during the current transmission opportunity period, so that unlike the prior art, it is not necessary to contend for a new transmission opportunity period before the retransmission can be performed. Therefore, the error recovery can be performed during the current transmission opportunity period, thereby speeding up error recovery and reducing the error recovery delay. Unnecessary contending for a new transmission opportunity period is avoided when the error recovery can be implemented within the current transmission opportunity period, thereby increasing the error recovery efficiency, saving the network resources, and improving the quality of service.

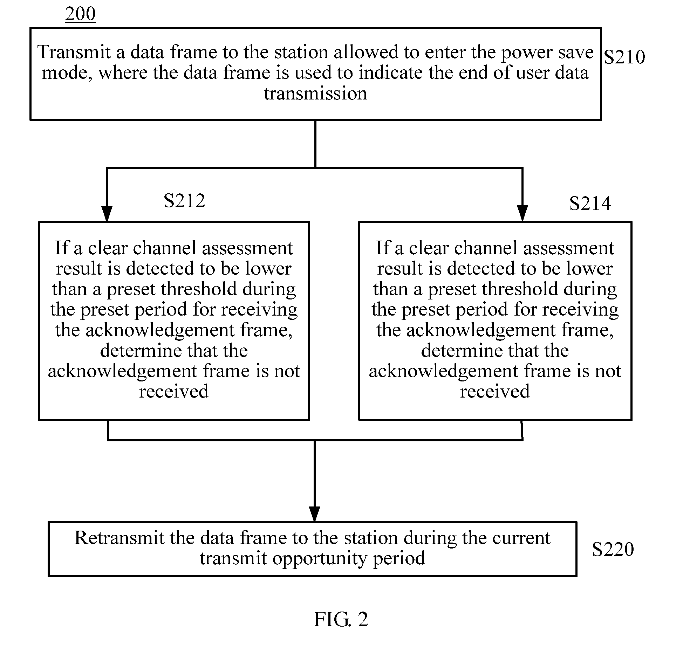

FIG. 2 is a flowchart of an error recovery method 200 according to an embodiment of the present invention.

In S210, a data frame is transmitted to a station allowed to enter a power save mode, where the data frame is used to indicate the end of user data transmission. This step is basically the same as S110.

According to an embodiment of the present invention, S210 may be followed by S212 and S220. In S212, if a clear channel assessment result is detected to be lower than a preset threshold during the preset period for receiving the acknowledgement frame, it is determined that that no acknowledgement frame is received; in S220, the data frame is retransmitted to the station during the current transmission opportunity period.

The AP may determine, by detecting the clear channel assessment (Clear Channel Assessment, CCA) result, whether the acknowledgement frame is received. The AP may detect the CCA result by monitoring and measuring the carrier power in the channel.

In the standard, the time interval between the data frame and the returned acknowledgement frame is defined, for example, defined as the SIFS. The AP transmits the data frame to the station, and then the AP waits for the acknowledgement frame returned by the station. If the station can receive the data frame correctly, the station returns the acknowledgement frame during the SIFS period following the end of receiving the data frame. The transmission time of the acknowledgement frame in the channel is not fixed, and varies depending on the transmission bandwidth and modulation manner.

Although the transmission time of the acknowledgement frame is not fixed, namely, the transmission length of the acknowledgement frame is not fixed, the transmission length of the acknowledgement frame includes at least a preamble sequence and a data section, where the data section is used to carry acknowledgement information and the minimum length of the data section varies in different standards. For example, in the 802.11 standard, the preamble sequence may include L-STF (Legacy Short Training Field, legacy short training field), L-LTE (Legacy Long Training Field, legacy long training field), and L-SIG (Legacy Signal, legacy signal); the data section may include at least one orthogonal frequency division modulation (Orthogonal Frequency Division Modulation, OFDM) symbol, so that the transmission length of the acknowledgement frame is at least the sum of lengths of L-STF, L-LTF, L-SIG, and the OFDM symbol. Specifically, in the 802.11ac standard, L-STF is 8 µs, L-LTE 8 is µs, L-SIG is 4 µs, and one OFDM symbol is 4 µs, so that the transmission time of the acknowledgement frame is at least 24 µs.

For the AP, the preset period for receiving the acknowledgement frame may start after the AP transmits the data frame to the station, or start when the AP waits for a period of SIFS after transmitting the data frame to the station. If the preset period for receiving the acknowledgement frame starts when the AP transmits the data frame, the preset period for receiving the acknowledgement frame may last a period of PIFS. When the preset period for receiving the acknowledgement frame starts when the AP waits for the period of SIFS after transmitting the data frame to the station, the preset period for receiving the acknowledgement frame may last the shortest transmission time of the acknowledgement frame or last a period shorter than the shortest transmission time of the acknowledgement frame. For example, in the standards in the prior art, after transmitting the data frame, the AP waits for an SIFS period and then starts detecting the CCA result, but the detection time does not exceed 24 µs. If the detection within 24 µs shows that the CCA result is lower than the preset threshold, it is determined that no acknowledgement frame is received.

In the preset period for receiving the acknowledgement frame, if the AP detects that the CCA result keeps lower than the threshold, it is determined that no acknowledgement frame is received; but if at any time point during this period, the AP detects that the CCA result is not lower than the preset threshold, it may be determined that the acknowledgement frame is received.

According to an embodiment of the present invention, S210 may be followed by S214 and S220. In S214, if a clear channel assessment result is detected to be lower than a preset threshold during the preset period for receiving the acknowledgement frame, it is determined that that no acknowledgement frame is received; in S220, the data frame is retransmitted to the station during the current transmission opportunity period.

If the AP detects, during the preset period for receiving the acknowledgement frame, the CCA result is not lower than the preset threshold, it means that the AP receives the frame; but if the frame is decoded incorrectly, the AP is unable to identify the frame as the acknowledgement frame, and then the AP determines that no acknowledgement frame is received.

According to the error recovery method provided in the embodiments of the present invention, by detecting the clear channel assessment result during the preset period for receiving the acknowledgement frame, the AP is able to determine effectively whether the acknowledgement frame is received, so that the AP can determine quickly during the preset period for receiving the acknowledgement frame whether any error occurs, thereby facilitating quick error recovery for the AP and thereby increasing the error recovery efficiency.

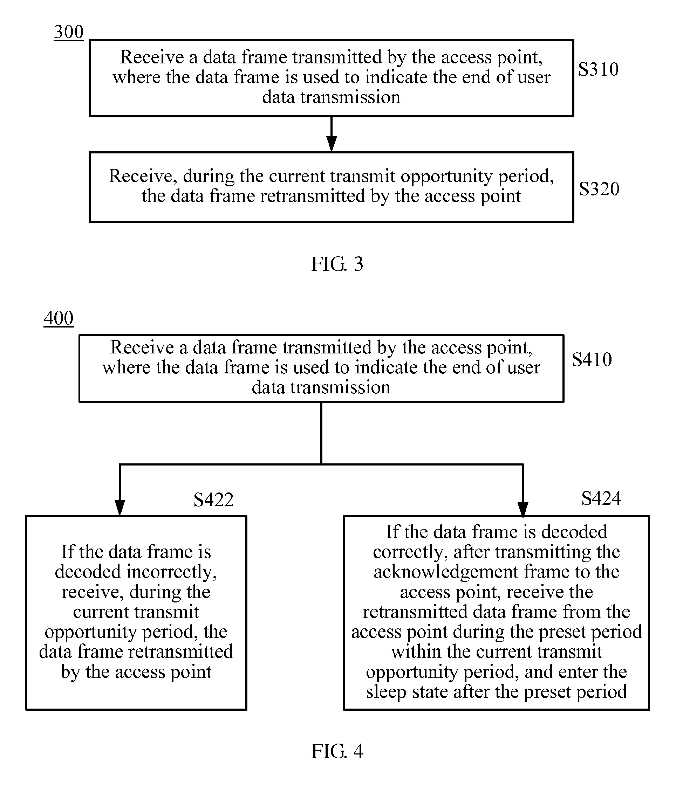

In the following, an error recovery method 300 according to an embodiment of the present invention is described with reference to FIG. 3.

As shown in FIG. 3, the method 300 includes: in S310, receiving a data frame transmitted by an access point, where the data frame is used to indicate the end of user data transmission; and in S320, receiving, during the current transmission opportunity period, the data frame retransmitted by the access point, where the data frame is retransmitted by the access point if the access point fails to receive an acknowledgement frame, and when the data frame transmitted by the access point is received by a station allowed to enter a power save mode, the acknowledgement frame is returned by the station.

For example, the method 300 may be executed by an STA. After the STA receives from the AP the data frame indicating the end of the user data transmission, if the AP does not receive from the STA the acknowledgement frame in response to the data frame, the AP retransmits the data frame to the STA during the current transmission opportunity period, so that the error recovery may be implemented during the current transmission opportunity period, and there is no need to contend for a new transmission opportunity period to perform the error recovery. Because the operations of the STA correspond to the operations of the AP, the content of the method 300 can refer to the related descriptions of the method 100 and will not be repeated herein.

In S310, the data frame indicating the end of the user data transmission may be a data frame with the More Data field being 0. The STA may not return the acknowledgement frame because the data frame is decoded incorrectly; or may have returned the acknowledgement frame but the AP fails to receive the acknowledgement frame.

In S320, the AP retransmits the data frame to the STA if the AP does not receive the acknowledgement frame. The reason that the AP does not receive the acknowledgement frame may be that the acknowledgement frame is not transmitted out, or that the acknowledgement frame is lost, or that the acknowledgement frame is decoded incorrectly. Therefore, error recovery may be implemented during the current transmission opportunity period. The AP may determine, by detecting the clear channel assessment result, whether the acknowledgement frame is received. Details are disclosed in S212 and S214 in the above method 200.

In the error recovery method according to the embodiment of the present invention, the station allowed to enter the power save mode can receive, during the current transmission opportunity period, the data frame retransmitted by the access point to indicate the end of user data transmission, so that unlike the prior art where the access points needs to contend for a new transmission opportunity period before retransmission, the error recovery can be performed during the current transmission opportunity period, thereby speeding up error recovery and reducing the error recovery delay. Unnecessary contending for a new transmission opportunity period is avoided when the error recovery can be implemented within the current transmission opportunity period, thereby increasing the error recovery efficiency, saving the network resources, and improving the quality of service.

FIG. 4 is a flowchart of an error recovery method 400 according to an embodiment of the present invention.

In S410, a data frame transmitted by an access point is received, where the data frame is used to indicate the end of user data transmission. This step is basically the same as S310.

According to an embodiment of the present invention, S410 may be followed by S422. In S422, if the data frame is decoded incorrectly, the data frame retransmitted by the access point is received during the current transmission opportunity period.

If the data frame received by the STA is decoded incorrectly, the STA does not return the acknowledgement frame and does not enter the doze state, so the AP can definitely retransmit the data frame to the STA during the current transmission opportunity period to perform error recovery, and unlike the prior art, there is no need to stop the data transmission and to contend for a new transmission opportunity period for retransmission which leads to an unnecessary transmission delay, lower error recovery efficiency, and waste of network resources. Therefore, the STA may directly receive the data frame retransmitted by the AP during the current transmission opportunity period, so as implement the error recovery during the current transmission opportunity period, thereby increasing the error recovery efficiency, reducing the network overhead caused by resource contention, and improving the quality of service.

According to an embodiment of the present invention, S410 may be followed by S424. In S424, if the data frame is decoded correctly, after the acknowledgement frame is transmitted to the access point, the retransmitted data frame from the access point is received during the preset period within the current transmission opportunity period, and the doze state is entered after the preset period.

Because the data frame received by the STA is decoded correctly, the STA returns the acknowledgement frame to the AP. Due to a possible error during the transmission of the acknowledgement frame, the AP may not receive the acknowledgement frame, namely, the acknowledgement frame may be lost or decoded incorrectly. Therefore, in order to have redundant time for recovering from the possible error, after returning the acknowledgement frame, the STA does not enter the doze state immediately, but waits for the preset period to receive, during the preset period, the data frame retransmitted due to the possible failure of the AP in receiving the acknowledgement frame; as a result, the success rate of implementing the error recovery during the current transmission opportunity period is increased, and there is no need for the AP to contend for a new transmission opportunity period to implement error recovery.

According to an embodiment of the present invention, the preset period may be a period not shorter than SIFS. Because the shortest interval for the STA to continuously receive data frames transmitted by the AP is SIFS, if the AP performs retransmitting to the STA, the time interval for the STA to receive the data frame is at least SIFS, so that the STA needs to wait at least the SIFS before entering the doze state. In the 802.11ac standard, the SIFS may be 16 µs.

According to an embodiment of the present invention, the preset period may be TxPIFS. TxPIFS is a difference between PIFS and aTxRxturnaroundTime. According to an embodiment of the present invention, the preset period may be a period not shorter than PIFS. For example, the preset period may be DIFS (Distributed (coordination function) Interframe Space, distributed (coordination function) interframe space). The DIFS may be the sum of PIFS and aSlotTime. For another example, the preset period may be TxPIFS. TxPIFS is the difference between DIFS and aTxRxturnaroundTime.

According to an embodiment of the present invention, the preset period may be a period from the time of transmitting the acknowledgement frame to the time of receiving frames transmitted by the access point to other stations.

After returning the acknowledgement frame, the STA does not enter the doze state, so as to receive the data frame retransmitted by the AP due to the failure in receiving the acknowledgement frame. If the AP starts to transmit frames to other stations, it means that the AP has received the acknowledgement frame successfully and switches to communication with other stations; therefore, upon receiving the frame transmitted by the AP to other stations, the STA enters the doze state, so as to save power.

In addition, S422 and S424 may be included in different embodiments or the same embodiment. When S422 and S424 are included in the same embodiment, the execution sequence of S422 and S424 does not limit the protection scope of the present invention, and S422 and S424 are executed based on a decoding result of the data frame.

In the error recovery method according to the embodiment of the present invention, the STA can still receive the data frame retransmitted by the AP when the data frame for indicating the end of the user data transmission is decoded incorrectly, whereas, in the prior art, the data frame retransmitted in case of incorrect decoding cannot be received. Therefore, the error recovery can be implemented during the current transmission opportunity period. Moreover, unlike the prior art, if the STA returns the acknowledgement frame, the STA does not enter the doze state immediately but waits for the preset period before entering, thereby having redundant time for recovering from the error caused by the failure of receiving the acknowledgement frame; and therefore, the error recovery may be implemented during the current transmission opportunity period. Therefore, using the error recovery method according to the embodiment of the present invention can speed up error recovery and reduce the error recovery delay. Unnecessary contending for a new transmission opportunity period is avoided when the error recovery can be implemented within the current transmission opportunity period, thereby increasing the error recovery efficiency, saving the network resources, and improving the quality of service.

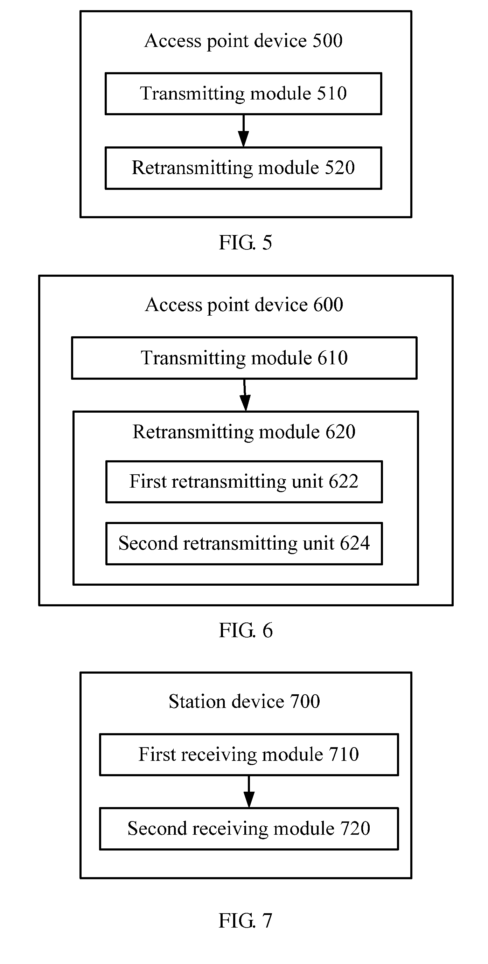

The error recovery method according to the embodiments of the present invention has been described above. Corresponding devices for error recovery according to the embodiments of the present invention are described hereunder with reference to structural block diagrams of FIGs. 5 to 8.

FIG. 5 is a structural block diagram of an access point device 500 according to an embodiment of the present invention.

The access point device 500 includes a transmitting module 510 and a retransmitting module 520. The access point device 500 may be an AP in a wireless local area network, and provide services for stations accessing the network through the access point device. The transmitting module 510 may be configured to transmit a data frame to a station allowed to enter a power save mode, where the data frame is used to indicate the end of the user data transmission. The retransmitting module 520 may be configured to retransmit the data frame to the station during a current transmission opportunity period if no acknowledgement frame returned by the station in response to the data frame is received.

The above or other operations and/or functions of the transmitting module 510 and retransmitting module 520 may refer to S110 and S120 in the above method 100, and will not be repeated herein.

According to the embodiment of the present invention, after transmitting the data frame indicating the end of user data transmission, the access point device retransmits the data frame during the current transmission opportunity period if no acknowledgement frame is received, so that unlike the prior art, it is not necessary to contend for a new transmission opportunity period before retransmission. Therefore, the error recovery can be performed during the current transmission opportunity period, thereby speeding up error recovery and reducing the error recovery delay. Unnecessary contending for a new transmission opportunity period is avoided when the error recovery can be implemented within the current transmission opportunity period, thereby increasing the error recovery efficiency, saving the network resources, and improving the quality of service.

FIG. 6 is a structural block diagram of an access point device 600 according to an embodiment of the present invention. A transmitting module 610 and a retransmitting module 620 of the access point device 600 are basically the same as the transmitting module 510 and the retransmitting module 520 of the access point device 500.

According to the embodiment of the present invention, the retransmitting module 620 may include a first retransmitting unit 622 and/or a second retransmitting unit 624. The first retransmitting unit 622 may be configured to retransmit a data frame to the station during a current transmission opportunity period if a clear channel assessment result is detected to be lower than a preset threshold during a preset period for receiving an acknowledgement frame, and it is determined that no acknowledgement frame is received. The second retransmitting unit 624 may be configured to retransmit the data frame to the station during the current transmission opportunity period, if a clear channel assessment result is detected to be not lower than the preset threshold during the preset period for receiving the acknowledgement frame but the frame received during the preset period preset period for receiving the acknowledgement frame is decoded incorrectly, and it is determined that no acknowledgement frame is received.

According to an embodiment of the present invention, the retransmitting module 620 may be configured to retransmit the data frame to the station during a preset period within the current transmission opportunity period, and the station enters a doze state after the preset period.

According to an embodiment of the present invention, the retransmitting module 620 may be configured to retransmit the data frame to the station for a preset number of times during the current transmission opportunity period. For example, the preset number of times may be 1.

The above or other operations and/or functions of the first retransmitting unit 622, the second retransmitting unit 624, and the retransmitting module 620 may refer to S212, S214, and S220 in the above method 200 and S120 in the method 100, and will not be repeated herein.

According to the embodiment of the present invention, by detecting a clear channel assessment result during the preset period for receiving the acknowledgement frame, the access point device is able to determine effectively whether the acknowledgement frame is received, so that the access point can determine quickly during the preset period for receiving the acknowledgement frame whether any error occurs, thereby facilitating quick error recovery and increasing the error recovery efficiency.

FIG. 7 is a structural block diagram of a station device 700 according to an embodiment of the present invention.

The station device 700 includes a first receiving module 710 and a second receiving module 720. The station device 700 may be such as a computer, a server, and a user terminal, and may access a network through an access point of the wireless local area network. The first receiving module 710 may be configured to receive a data frame transmitted by the access point, where the data frame is used to indicate the end of user data transmission. The second receiving module 720 may be configured to receive the data frame retransmitted by the access point during a current transmission opportunity period, where the data frame retransmitted by the access point is retransmitted by the access point if the access point fails to receive an acknowledgement frame, and the acknowledgement frame is returned by a station after the data frame transmitted by the access point is received by the station allowed to enter a power save mode.

The above or other operations and/or functions of the first receiving module 710 and the second receiving module 720 can refer to S310 and S320 in the above method 300, and will not be repeated herein.

According to the station device provided by the embodiment of the present invention, the station device allowed to enter the power save mode is able to receive the data frame indicating the end of user data transmission and retransmitted by the access point during the current transmission opportunity period, so that, unlike the prior art where the access point needs to contend for a new transmission opportunity period for retransmission, the error recovery may be implemented during the current transmission opportunity period, thereby speeding up error recovery and reducing the error recovery delay. Unnecessary contending for a new transmission opportunity period is avoided when the error recovery can be implemented within the current transmission opportunity period, thereby increasing the error recovery efficiency, saving the network resource, and improving the quality of service.

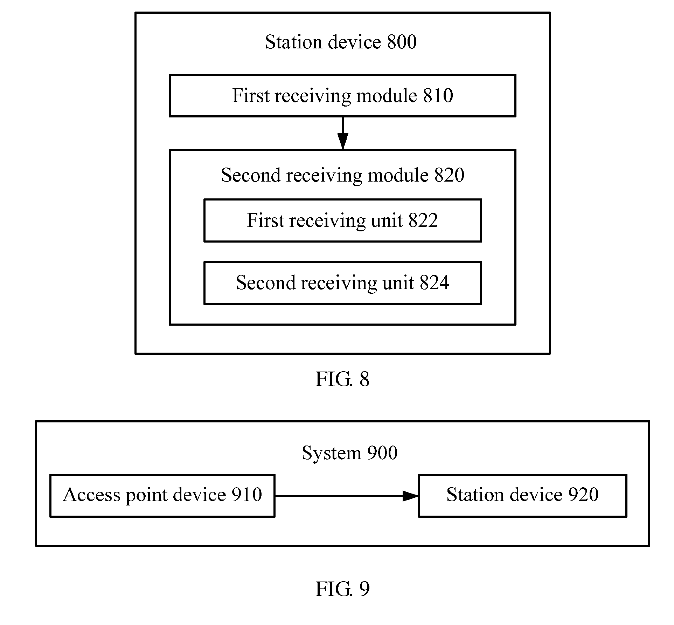

FIG. 8 is a structural block diagram of a station device 800 according to an embodiment of the present invention. A first receiving module 810 and a second receiving module 820 of the station device 800 are basically the same as the first receiving module 710 and second receiving module 720 of the station device 700.

According to the embodiment of the present invention, the second receiving module 820 may include a first receiving unit 822 and/or a second receiving unit 824. The first receiving unit 822 may be configured to receive a data frame retransmitted by an access point during a current transmission opportunity period, if the data frame is decoded incorrectly. The second receiving unit 824 may be configured to receive, after an acknowledgement frame is transmitted to the access point, the retransmitted data frame from the access point during a preset period within the current transmission opportunity period, and enter a doze state after the preset period, if the data frame is decoded correctly.

According to an embodiment of the present invention, the preset period may be a period from the time of transmitting the acknowledgement frame to the time of receiving frames transmitted by the access point to other stations.

According to an embodiment of the present invention, the preset period may be a period not shorter than SIFS. For example, the preset period may be TxPIFS.

According to an embodiment of the present invention, the preset period may be a period not shorter than PIFS, for example, the preset period may be DIFS or TxDIFS.

The above or other operations and/or functions of the first receiving unit 822 and the second receiving unit 824 can refer to S422 and S424 in the above method 400, and will not be repeated herein.

According to the station device provided by the embodiment of the present invention, the station device can still receive the data frame retransmitted by the access point when the data frame for indicating the end of the user data transmission is decoded incorrectly, whereas, in the prior art, the data frame retransmitted in case of incorrect decoding cannot be received. Therefore, the error recovery can be implemented during the current transmission opportunity period. Moreover, if the station device returns the acknowledgement frame, the station device, unlike in the prior art, does not enter the doze state immediately but waits for the preset period before entering, thereby having redundant time for recovering from the error caused by the failure of receiving the acknowledgement frame; and therefore, the error recovery may be implemented during the current transmission opportunity period. Therefore, according to the embodiments of the present invention, the station device may speed up error recovery and reduce the error recovery delay. Unnecessary contending for a new transmission opportunity period is avoided when the error recovery can be implemented within the current transmission opportunity period, thereby increasing the error recovery efficiency, saving the network resources, and improving the quality of service.

FIG. 9 is a structural block diagram of an error recovery system 900 according to an embodiment of the present invention. The system 900 includes an access point device 910 and a station device 920.

The access point device 910 may be configured to transmit a data frame to the station device 920 allowed to enter a power save mode, where the data frame is used to indicate the end of user data transmission; and if no acknowledgement frame returned by the station device 920 in response to the data frame is received, retransmit the data frame to the station device 920 during a current transmission opportunity period.

The station device 920 may be configured to receive the data frame transmitted by the access point device 910 and receive the data frame retransmitted by the access point device 910 during the current transmission opportunity period.

The above or other operations and/or functions of the access point device 910 can refer to the corresponding content in the method 100 and method 200, and the above or other operations and/or functions of the station device 920 can refer to the corresponding content in the method 300 and method 400. Repeated descriptions are not provided herein.

In the error recovery system according to the embodiment of the present invention, after transmitting the data frame indicating the end of user data transmission, the access point device retransmits the data frame directly during the current transmission opportunity period if no acknowledgement frame is received, so that unlike the prior art, it is not necessary to contend for a new transmission opportunity period before retransmission. Therefore, the error recovery can be performed during the current transmission opportunity period, thereby speeding up error recovery and reducing the error recovery delay. Unnecessary contending for a new transmission opportunity period is avoided when the error recovery can be implemented within the current transmission opportunity period, thereby increasing the error recovery efficiency, saving the network resources, and improving the quality of service.

Persons skilled in the art may realize that the steps of the methods and units according to the embodiments disclosed herein may be implemented by electronic hardware, computer software, or a combination thereof. In order to specify clearly the interchangeability of the hardware and software, the steps and parts of each embodiment are described generally according to the functions in the above specification. Whether these functions are implemented through hardware or software depends on the specific application and design constraints of the technical solution. Persons skilled in the art may use different methods to implement the described functions for each specific application, but this implementation should not be considered as exceeding the protection scope of the present invention.

The steps of the method according to the embodiments disclosed herein can be implemented by hardware or a software program executed by a processor, or implemented by a combination thereof. The software program can be stored in a random access memory (RAM), a memory, a read-only memory (ROM), an electrically programmable ROM, an electrically erasable programmable ROM, a register, a hard disk, a removable magnetic disk, or a CD-ROM, or any other types of storage media commonly known in the art.

## Claims

1. An error recovery method, comprising:
transmitting a data frame to a station allowed to enter a power save mode, wherein the data frame is used to indicate an end of user data transmission; and
retransmitting the data frame to the station during a current transmission opportunity period if no acknowledgement frame returned by the station in response to the data frame is received.

2. The error recovery method according to claim 1, wherein the retransmitting the data frame to the station during the current transmission opportunity period if no acknowledgement frame returned by the station in response to the data frame is received comprises:
retransmitting the data frame to the station during the current transmission opportunity period, if a clear channel assessment result is detected to be lower than a preset threshold during a preset period for receiving an acknowledgement frame and it is determined that the acknowledgement frame is not received; or
retransmitting the data frame to the station during the current transmission opportunity period, if the clear channel assessment result is detected to be not lower than the preset threshold during the preset period for receiving the acknowledgement frame but the frame received during the preset period for receiving the acknowledgement frame is decoded incorrectly, and it is determined that the acknowledgement frame is not received.

3. The error recovery method according to claim 1, wherein the retransmitting the data frame to the station during the current transmission opportunity period comprises:
retransmitting the data frame to the station during a preset period within the current transmission opportunity period, wherein the station enters a doze state after the preset period.

4. The error recovery method according to claim 3, wherein the preset period is a period not shorter than SIFS.

5. The error recovery method according to claim 4, wherein the preset period is TxPIFS.

6. The error recovery method according to claim 4, wherein the preset period is a period not shorter than PIFS.

7. The error recovery method according to claim 6, wherein the preset period is DIFS or TxDIFS.

8. The error recovery method according to claim 1, wherein the retransmitting the data frame to the station during the current transmission opportunity period comprises:
retransmitting the data frame to the station for a preset number of times during the current transmission opportunity period.

9. The error recovery method according to claim 8, wherein the preset number of times is 1.

10. An error recovery method, comprising:
receiving a data frame transmitted by an access point, wherein the data frame is used to indicate an end of user data transmission; and
receiving, during a current transmission opportunity period, the data frame retransmitted by the access point, wherein the data frame retransmitted by the access point is transmitted by the access point if the access point fails to receive an acknowledgement frame, and the acknowledgement frame is returned by a station when the data frame transmitted by the access point is received by the station allowed to enter a power save mode.

11. The error recovery method according to claim 10, wherein the receiving the data frame retransmitted by the access point during the current transmission opportunity period comprises:
receiving the data frame retransmitted by the access point during the current transmission opportunity period, if the data frame is decoded incorrectly; or
receiving, after transmitting the acknowledgement frame to the access point, the retransmitted data frame from the access point during a preset period within the current transmission opportunity period, and entering a doze state after the preset period, if the data frame is decoded correctly.

12. The error recovery method according to claim 11, wherein the preset period is a period not shorter than SIFS.

13. The error recovery method according to claim 12, wherein the preset period is TxPIFS.

14. The error recovery method according to claim 12, wherein the preset period is a period not shorter than PIFS.

15. The error recovery method according to claim 14, wherein the preset period is DIFS or TxDIFS.

16. The error recovery method according to claim 11, wherein the preset period is a period from the time of transmitting the acknowledgement frame to the time of receiving frames transmitted by the access point to other stations.

17. An access point device, comprising:
a transmitting module, configured to transmit a data frame to a station allowed to enter a power save mode, wherein the data frame is used to indicate an end of user data transmission; and
a retransmitting module, configured to retransmit the data frame to the station during a current transmission opportunity period if no acknowledgement frame returned by the station in response to the data frame is received.

18. The access point device according to claim 17, wherein the retransmitting module comprises:
a first retransmitting unit, configured to retransmit the data frame to the station during the current transmission opportunity period, if a clear channel assessment result is detected to be lower than a preset threshold during a preset period for receiving an acknowledgement frame and it is determined that the acknowledgement frame is not received; or
a second retransmitting unit, configured to retransmit the data frame to the station during the current transmission opportunity period, if the clear channel assessment result is detected to be not lower than the preset threshold during the preset period for receiving the acknowledgement frame but the frame received during the preset period for receiving the acknowledgement frame is decoded incorrectly, and it is determined that the acknowledgement frame is not received.

19. The access point device according to claim 17, wherein the retransmitting module is configured to retransmit the data frame to the station during a preset period within the current transmission opportunity period, wherein the station enters a doze state after the preset period.

20. The access point device according to claim 17, wherein the retransmitting module is configured to retransmit the data frame to the station for a preset number of times during the current transmission opportunity period.

21. The access point device according to claim 20, wherein the preset number of times is 1.

22. A station device, comprising:
a first receiving module, configured to receive a data frame transmitted by an access point, wherein the data frame is used to indicate an end of user data transmission; and
a second receiving module, configured to receive, during a current transmission opportunity period, the data frame retransmitted by the access point, wherein the data frame retransmitted by the access point is transmitted by the access point if the access point fails to receive an acknowledgement frame, and the acknowledgement frame is returned by the station when the data frame transmitted by the access point is received by the station allowed to enter a power save mode.

23. The station device according to claim 22, wherein the second receiving module comprises:
a first receiving unit, configured to receive the data frame retransmitted by the access point during the current transmission opportunity period, if the data frame is decoded incorrectly; or
a second receiving unit, configured to receive, after the acknowledgement frame is transmitted to the access point, the retransmitted data frame from the access point during a preset period within the current transmission opportunity period, and enter a doze state after the preset period, if the data frame is decoded correctly.

24. The station device according to claim 23, wherein the preset period is a period from the time of transmitting the acknowledgement frame to the time of receiving frames transmitted by the access point to other stations.

25. An error recovery system, comprising an access point device and a station device, wherein:
the access point device is configured to transmit a data frame to the station device allowed to enter a power save mode, wherein the data frame is used to indicate an end of user data transmission; and if no acknowledgement frame returned by the station device in response to the data frame is received, retransmit the data frame to the station device during a current transmission opportunity period; and
the station device is configured to receive the data frame transmitted by the access point device and receive the data frame retransmitted by the access point device during the current transmission opportunity period.
